## Europäisches Patentamt
## European Patent Office
## Office européen des brevets

(19)

(11) Veröffentlichungsnummer: **0 091 609**
**B1**

(12) **EUROPÄISCHE PATENTSCHRIFT**

(45) Veröffentlichungstag der Patentschrift:
02.07.86

(51) Int. Cl.⁴: **B 65 D 1/26,** B 29 C 45/02

(21) Anmeldenummer: **83103154.7**

(22) Anmeldetag: **30.03.83**

(54) **Dünnwandiger, spritzgegossener Kunststoffbehälter mit glattem, verstärkten Siegelrand sowie Vorrichtung zu seiner Herstellung.**

(30) Priorität: **08.04.82 DE 3213224**

(43) Veröffentlichungstag der Anmeldung:
**19.10.83 Patentblatt 83/42**

(45) Bekanntmachung des Hinweises auf die Patenterteilung:
**02.07.86 Patentblatt 86/27**

(84) Benannte Vertragsstaaten:
**AT BE CH DE FR GB IT LI LU NL SE**

(56) Entgegenhaltungen:
**EP-A-0 035 035**
**FR-A-1 132 498**
**GB-A-858 887**
**US-A-3 169 688**

(73) Patentinhaber: **HOECHST AKTIENGESELLSCHAFT,**
**Postfach 80 03 20, D-6230 Frankfurt am Main 80**
**(DE)**

(72) Erfinder: **Bormuth, Horst, Langener Strasse 32,**
**D-6073 Egelsbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

EP 0 091 609 B1

## Beschreibung

Die vorliegende Erfindung betrifft einen dünnwandigen, spritzgegossenen Kunststoffbehälter mit glattem, verstärkten Siegelrand zur Versiegelung mit einer Deckfolie, bei welchem sich der Spritzanguß am Siegelrand außerhalb dessen Oberseite befindet, sowie eine Vorrichtung zu seiner Herstellung.

Becher und becherartige Erzeugnisse, z.B. Dosen, werden als Verpackung für flüssige, pastöse oder feste Füllgüter verwendet. Insbesondere für die Verpackung von Molkereierzeugnissen, von Speisefetten, Marinaden und anderen Lebensmitteln besteht ein großer Bedarf an Verpackungen dieser Art. Sie werden in der Regel nach dem Füllen mit einer Deckfolie durch Heißsiegeln bakterien-, gas, und flüssigkeitsdicht verschlossen. Die Behälterwandung kann konisch oder zylindrisch und dabei glatt oder durch leisten-, ring- oder rautenförmige Versteifungen profiliert sein.

Dünnwandige, durch Spritzgießen hergestellte Trinkbecher mit ringförmigen Wandversteifungen und verstärktem Rand sind bereits bekannt (vgl. US-PS 3 169 688). Sie werden bevorzugt für die Ausgabe von heißen Getränken verwendet. Ein wesentliches Merkmal dieser Becher ist die zentrale Lage des Angußzapfens auf der Außenseite des innenbombierten Bodens. Derartige Becher besitzen zwar eine hinreichende Bruchfestigkeit und sind als Trinkbecher geeignet, nicht jedoch eine hinreichende Glätte des Becherrandes, die für das bakterien-, gasund flüssigkeitsdichte Aufsiegeln einer Deckfolie unerläßlich ist. Die mangelhafte Beschaffenheit des Becherrandes ist auf die Lage des Angusses zurückzuführen. Um einen gratfreien Rand zu erhalten, muß das Einspritzen mit hoher Geschwindigkeit bei dichtem Formschluß erfolgen.

Dabei kann sich die Fließfront durch die adiabatische Kompression der in der Form eingeschlossenen Luft derart erhitzen, daß es zur thermischen Schädigung des Kunststoffmaterials im Frontbereich kommt, aus welchem der Becherrand geformt wird.

Diese thermische Schädigung bedingt neben der mangelhaften Randglätte unter Umständen auch eine unzureichende Haftung der aufgesiegelten Deckfolie. Eine Verminderung der Einspritzgeschwindigkeit macht das Herstellungsverfahren unwirtschaftlich und führt zu einer ungenügenden Ausformung des Behälterrandes, die teilweise auf der dann unzureichenden Fließfähigkeit des Kunststoffes und teilweise auf der auf den Boden- und Mantelbereich des Behälters begrenzten Wirkung des Nachdruckes beruht. Die Folge sind Schründe, Einfallstellen, Lunker und andere Fehlstellen am Behälterrand. Die beschriebenen Nachteile sind umso stärker ausgeprägt, je länger der Fließweg vom Anguß bis in den am weitesten entfernten Winkel der Form, d.h. hier den Behälterrand, je dünner die Becherwand und je kälter das Formwerkzeug ist. Aus diesem Grunde wurden spritzgegossene rotationssymmetrische Behälter bislang mit einem in der Rotationsachse gelegenen Anguß versehen, um die Fließwege möglichst kurz zu halten (vgl. Plastverarbeiter, 1961, S. 453 ff u. 504 ff, Abb. 16, 17, 27, 28).

Es sind auch dünnwandige Kunststoffbecher mit verstärktem Rand bekannt, die durch Tiefziehen aus einem durch Erhitzen plastisch gemachten Stück Folie gefertigt werden (vg. DE-OS 2 214 361). Tiefgezogene Gegenstände besitzen jedoch den Nachteil, daß sie nicht in dem Maße wie spritzgegossene durch Leisten und Rippen versteift werden können. Außerdem kann der Rand nur plan oder gebördelt ausgeführt werden, eine Form, die nicht allen Erfordernissen der Verpackungspraxis gerecht wird. Schließlich besitzen tiefgezogene Gegenstände in Eckenund Kantenbereichen eine deutlich geringere Wanddicke.

Bekannt war schließlich auch, bei der Herstellung eines flaschenähnlichen Hohlkörpers durch Spritzgießen den Anguß in der Nähe der oberen Öffnung (am Hals) anzuordnen (vgl. EP-A-35035). Dieser Anguß ist jedoch zusätzlich zum Anguß am Boden des Hohlkörpers vorgesehen, um eine bestimmte molekulare Orientierung des verwendeten Polyesters im Bereich des Flaschenhalses zu erreichen. Probleme mit der Fließfähigkeit des Kunststoffes treten bei diesem Hohlkörper wegen der großen Wandstärke nicht auf.

Es besteht somit ein erheblicher Bedarf an dünnwandigen Behältern mit verstärktem, glatten Siegelrand. Da es sich um Verpackungsmittel handelt, sollten sie preisgünstig hergestellt werden können.

Es wurde gefunden, daß die Aufgabe gelöst werden kann, wenn man die Behälter im Spritzgußverfahren herstellt und den Anguß nicht am Behälterboden, sondern am Siegelrand außerhalb dessen Oberseite anbringt.

Gegenstand der Erfindung ist somit der in den Ansprüchen beschriebene Behälter sowie das Verfahren und die Vorrichtung zu seiner Herstellung.

Unter Behälter sollen alle Kunststoffbehältnisse verstanden werden, die oben offen sind und konische bis fast zylindrische Wände aufweisen, wobei Höhe und größter Durchmesser im beliebigen Verhältnis zu einander stehen können. Vorzugsweise beträgt die Höhe die Hälfte bis zum Dreifachen des größten Durchmessers. Die Höhe beträgt etwa 5 bis 15 cm, der größte Durchmesser etwa bis 10 cm. Der erfindungsgemäße Behälter kann einen beliebigen Querschnitt aufweisen, vorzugsweise ist der Querschnitt kreisrund.

Der erfindungsgemäße Behälter besteht aus einem Boden, der Seitenwand und dem Siegelrand. Der Boden ist ohne einen Anguß vorzugsweise glatt. Die Seitenwand kann ebenfalls glatt sein, sie kann jedoch auch mit Verstärkungsrippen, die ringförmig, leistenförmig oder rautenförmig sein können, versehen sein.

Eine besondere Ausführungsform des erfindungsgemäßen Behälters weist unterhalb des Siegelrandes einen zylindrischen Abschnitt der Seitenwand auf, der mit einem abgerundeten, gegebenenfalls außen überstehenden Stapelrand in die übrige Seitenwand übergeht. Voraussetzung ist nur, daß der Außendurchmesser des Stapelrandes kleiner ist als der des Siegelrandes. An Stelle des zylindrischen Abschnitts kann auch ein gegenkonischer Abschnitt vorhanden sein. Oben schließt der Behälter mit einem verstärkten, glatten Siegelrand ab. Dieser Siegelrand ist je nach Bedarf plan oder als Wulstrand geformt.

Die Wandstärke des erfindungsgemäßen Behälters ist aus wirtschaftlichen Gründen so gering wie möglich, sie liegt im Bereich von 0,25 bis 0,75 mm. Der Siegelrand ist 2 bis 10 mm breit und 0,5 bis 2 mm dick.

Für die Herstellung des erfindungsgemäßen Behälters eignen sich alle üblichen thermoplastischen Kunststoffe, die gegebenenfalls in der Masse eingefärbt und/oder lichtabschirmend pigmentiert sein können. Bevorzugt verwendet werden teilkristalline Spritzgußmassen, wie Polypropylen, Polyäthylen und Mischpolymerisate aus Äthylen und Propylen. Besonders bevorzugt ist Polypropylen.

Der Behälter wird durch Spritzgießen hergestellt. Am Siegelrand des Behälters ist mindestens ein Anguß angebracht. Der Anguß befindet sich an der Außenseite des Siegelrandes. Durch diese Anordnung wird bewirkt, daß beim Einspritzen der Schmelze zunächst der Rand geformt wird und die Schmelze aus diesem Werkzeugabschnitt nach dem Prinzip des überlaufenden Wehres in die Formhöhlenbereiche für Seitenwand und Boden des Behälters fließt. Es kommt hinzu, daß der Behälterrand während der anschließenden Kühlung unter Einwirkung des Nachdruckes erstarrt und damit trotz Verdickung einwandfrei geformt wird, und zwar bei planer oder abgerundeter Gestaltung. Thermische Schädigungen und deren beschriebenen Folgen unterbleiben. Die notwendige Formhöhlenentlüftung für das einwandfreie Formen des Seitenwand- und Bodenbereiches kann einerseits über das geteilte Spritzgußwerkzeug und andererseits durch einen Entlüftungsspalt im Werkzeugkern gewährleistet werden. Es war nicht vorauszusehen, daß bei dieser Angußlage und den extrem engen Fließkanälen ein einwandfreies Spritzgußteil zu formen ist.

Das Spritzgießen der erfindungsgemäßen Kunststoffbehälter erfolgt nach den für die verschiedenen Thermoplasten bekannten Verfahren. Die Verfahrensdaten, wie beispielsweise Massetemperatur, Werkzeugtemperatur, Spritzdruck und -zeit, Nachdruck können den einschlägigen Broschüren und Merkblättern entnommen werden. Sie sind von den Abmessungen der zu spritzenden Behälter abhängig.

Bei der für die Herstellung des erfindungsgemäßen Behälters zu verwendenden Vorrichtung ist der Angußkanal derart angeordnet, daß sich später mindestens ein Anguß am Siegelrand außerhalb dessen Oberseite des Behälters befindet. Obwohl die bekannten, den Angußkanal am Boden des Behälters aufweisenden Vorrichtungen umgerüstet werden können, indem der Angußkanal zum Siegelrand hin verlegt wird, wird vorzugsweise eine besondere Vorrichtung verwendet.

Diese Vorrichtung besteht aus zwei symmetrischen Formhälften, welche Vertiefungen aufweisen, die jeweils einer Hälfte der äußeren Form des herzustellenden Behälters entsprechen. Die beiden Formhälften umschließen einen Kern, welcher der inneren Form des Behälters entspricht. Formhälften und Kern bilden somit zwischen sich die Formhöhlung für den zu fertigenden Behälter. Die Längsachse des Kerns befindet sich in der Formtrennebene (Werkzeugteilungsebene). In der einen Formhälfte ist mindestens ein Angußkanal derart angeordnet, daß er an dem Teil der Formhöhlung endet, in dem sich der Siegelrand des Behälters bildet, und daß der Anguß sich außerhalb der Oberseite des Siegelrandes befindet.

Der Kern ist mit Vorrichtungen versehen, die das Entformen des Behälters erleichtern. Zu diesem Zweck ist der dem Boden des Behälters anliegende Teil des Kerns vorzugsweise als Ventilteller ausgebildet, der in Richtung der Längsachse beweglich ist und der Druckluft dem Weg freigibt, die den Behälter vom Kern streift. Wenn Behälter mit konkavem Boden oder Boden mit Stehrand hergestellt werden sollen, ist es empfehlenswert, den ganzen Kern in Längsrichtung beweglich zu machen, was durch Schrägsäulen, Rechteckführungen, Schwalbenschwanzführungen oder hydraulisch geschehen kann.

Die Figuren zeigen erfindungsgemäße Behälter und Vorrichtungen zu ihrer Herstellung. Es zeigen
Figur 1 einen rechteckigen Behälter in allgemeiner Form,
Figur 2 einen runden Becher,
Figur 3 einen runden Becher mit Verstärkungsrippen,
Figur 4 eine bevorzugte Vorrichtung zur Herstellung der Behälter in geschlossenem Zustand,
Figur 5 die gleiche Vorrichtung im geöffneten Zustand und
Figur 6 eine andere Möglichkeit einer Vorrichtung zur Herstellung eines erfindungsgemäßen Behälters.

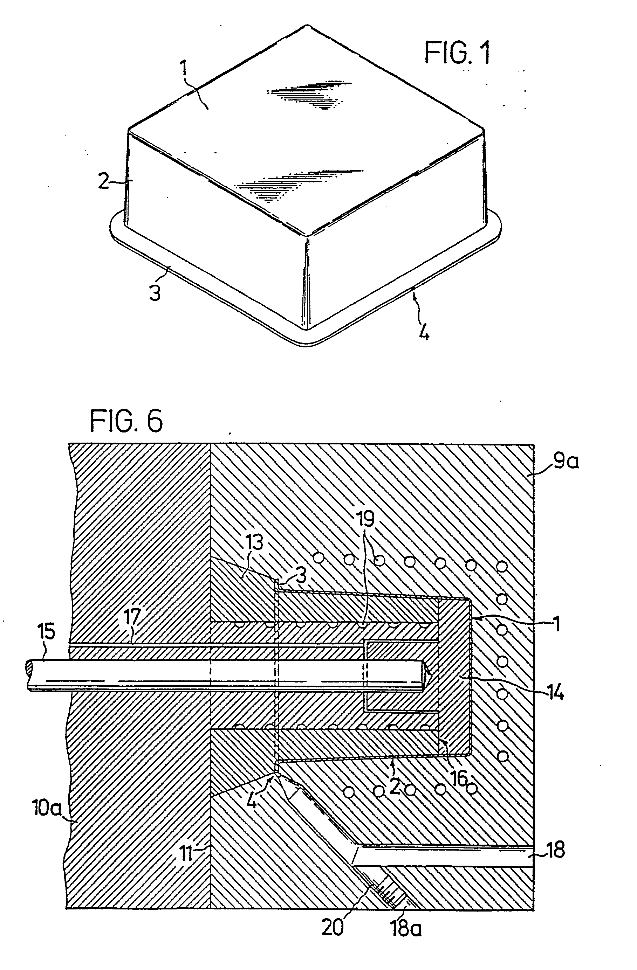

Am Behälter gemäß Figur 1, wie er beispielsweise für das Verpacken von Molkereiprodukten, wie Margarine, Butter, Frischkäse, Schmelzkäse und dergleichen verwendet werden kann, sind zu erkennen der angußfreie Behälterboden (1), die Behälterseitenwände (2) und der Siegelrand (3) mit dem Anguß (4).

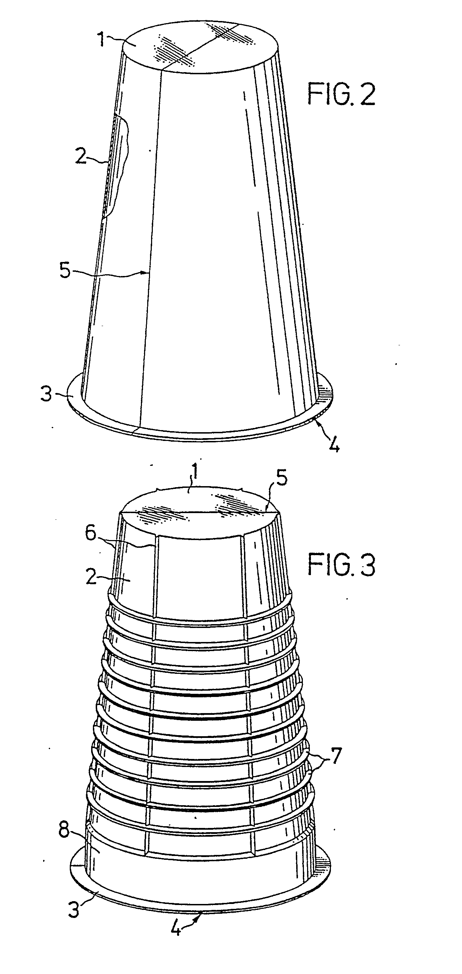

In der Figur 2 ist ein Becher mit glatter Seitenwand dargestellt. Im glatten Becherboden (1) ist die Markierung (5) der Werkzeugteilungsebene zu erkennen, die sich über die glatte, konische Seitenwand (2) und die Unterseite des verstärkten Siegelrandes (3) erstreckt. Der Anguß (4) befindet sich im rechten Winkel zur Ebene (5) außen am Siegelrand (3).

Figur 3 zeigt eine bevorzugte Ausführung des erfindungsgemäßen Bechers. Zu erkennen ist wiederum die Markierung (5) der Werkzeugteilungsebene im glatten Becherboden (1), an der Unterseite des verstärkten Siegelrandes (3) und im zylindrischen Abschnitt (8) der Seitenwand (2). Zwei der vorhandenen leistenförmigen Längsrippen (6) fallen mit der Werkzeugteilungsebene zusammen. Außerdem ist die Seitenwand (2) noch durch ringförmige Querrippen (7) verstärkt. Außen am Siegelrand ist der Anguß (4) zu erkennen.

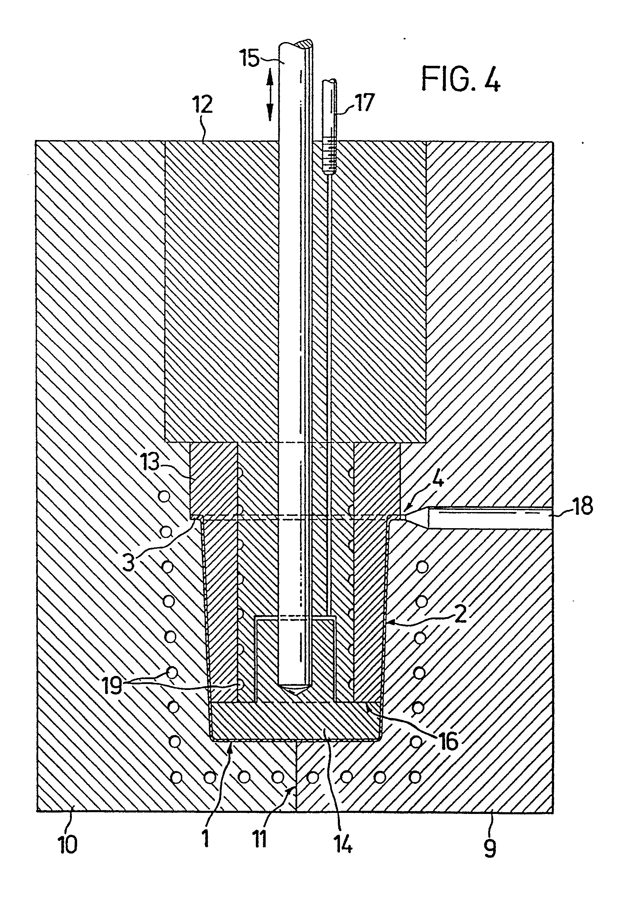

In Figur 4 ist eine bevorzugte Vorrichtung zur Herstellung des erfindungsgemäßen Behälters im geschlossenen Zustand dargestellt. Die beiden Formhälften (9) und (10) umschließen den Kernhalter (12) und den Kern (13) derart, daß zwischen den Formhälften (9) und (10) und dem Kern (13) die Formhöhlung für den Behälter entsteht, der aus dem Boden (1), der Seitenwand (2), dem Siegelrand (3) und dem Anguß (4) besteht. Die Werkzeugteilungsebene ist durch (11) angedeutet. Der dem Boden (1) des Behälters zugewandte Teil des Kerns (13) ist als Ventilteller (14) ausgebildet, der durch die Schubstange (15) bewegt werden kann, so daß sich zwischen dem Ventilteller und dem übrigen Kern ein Ringspalt (16) bilden kann. Durch die Leitung (17) strömt Druckluft in das Innere des Kerns. In der Formhälfte (9) ist der Angußkanal (18) derart angeordnet, daß er am Anguß (4) am Siegelrand (3) des Behälters endet.

Die Vorrichtung ist mit den üblichen und bekannten Einrichtungen zur Kühlung, beispielsweise durch die Kanäle (19), Temperierung des Angußkanals (18), zum Aufspannen der Vorrichtung auf die Aufspannplatten der Spritzgußmaschine, zum Anschluß an die Spritzdüse und dem Bewegen der Formhälften (9) und (10), des Kernhalters (12) und der Schubstange (15) versehen, die in der Figur 4 nicht gezeigt sind.

Zur Herstellung des Behälters wird bei geschlossener Vorrichtung die Kunststoffschmelze von einer nicht gezeigten Spritzeinheit durch den Angußkanal (18) in die Formhöhlung gespritzt, bildet zunächst den Siegelrand (3) und fließt dann nach dem Prinzip des überlaufenden Wehres in die Bereiche der Seitenwand (2) und des Bodens (1). Nach ausreichender Kühlzeit wird die Vorrichtung geöffnet, wobei die Formhälften (9) und (10) auseinanderbewegt werden und auch der Kernhalter (12) über eine geeignete Einrichtung um den halben Betrag des Öffnungsweges der Formhälften in gleicher Richtung bewegt wird, so daß der Behälter aus der Vorrichtung entfernt werden kann. In der Regel wird nur die Formhälfte, die keinen Angußkanal besitzt, im vorliegenden Fall die Formhälfte (10), beim Öffnen der Vorrichtung bewegt, während die andere Formhälfte (9) stehen bleibt. Die Bewegung des Kernträgers (12) erfolgt gleichsinnig, gleichzeitig drückt die Schubstange (15) den Ventilteller (14) ein wenig herunter, so daß ein schmaler Spalt (16) zwischen Ventilteller (14) und den übrigen Kern (13) entsteht, durch den über die Leitung (17) Druckluft strömt und den Behälter vom Kern abstreift.

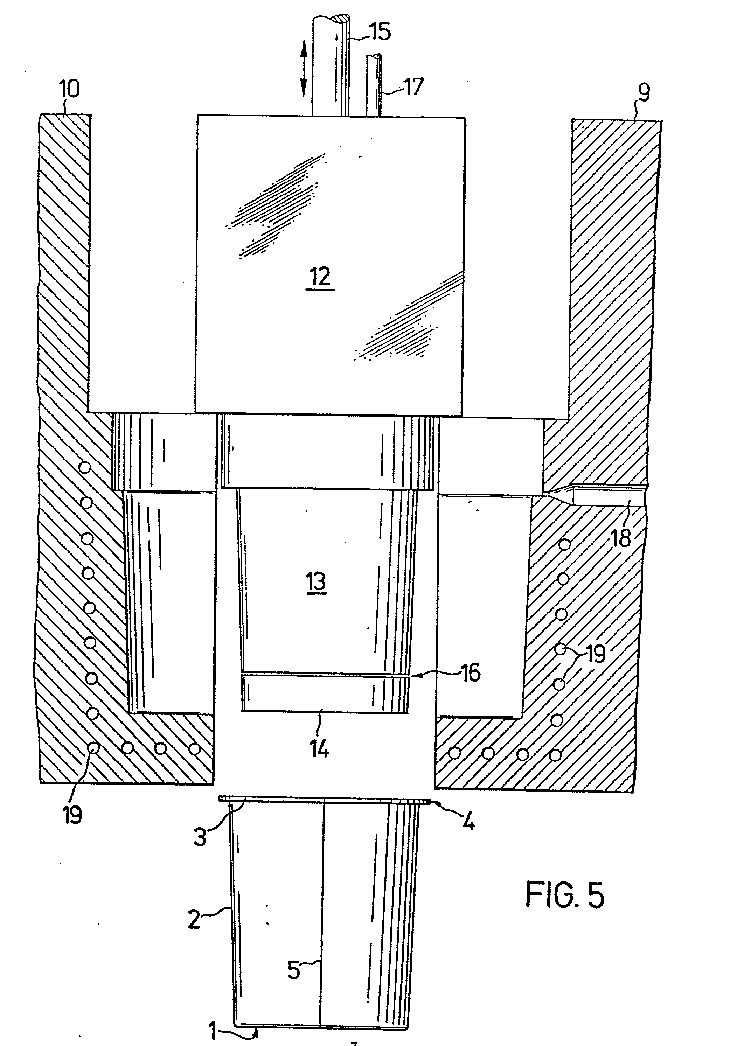

Figur 5 zeigt die Vorrichtung im geöffneten Zustand, nachdem der Behälter vom Kern abgestreift wurde. Der Spalt (16) zwischen Ventilteller (14) und dem übrigen Kern (13) ist noch nicht geschlossen. Am Behälter ist die Markierung (5) der Werkzeugteilungsebene (11) zu erkennen.

Figur 6 zeigt eine Möglichkeit, eine herkömmliche Vorrichtung zur Herstellung von Behältern für die Herstellung der erfindungsgemäßen Kunststoff-Behälter herzurichten. Eine derartige Vorrichtung besteht aus einer Matrize (9a) und einer Patrize (10a) mit Kern (13). Der Angußkanal (18) ist durch die Matrize (9a) an den Anguß (4) herangeführt. Ein Stopfen (20) schließt die seitliche Bohrung (18a).

Mittels der erfindungsgemäßen Verrichtung können natürlich nicht nur Behälter mit glattem, verstärkten Siegelrand gefertigt werden, sondern auch Behälter, die nicht gesiegelt werden, sondern nur einen glatten, unverstärkten Rand besitzen sollen.

**Beispiel**

Der in Figur 3 dargestellte, mit verdicktem, planen Siegelrand und versteifter Seitenwand geformte Becher wurde aus Polypropylen spritzgegossen. Er hatte folgende Abmessungen:

Becherhöhe 90 mm
Verhältnis Becherhöhe: Außendurchmesser des Siegelrandes (3) 1,25: 1
Wanddicke des Becherbodens (1) 0,35 mm
Wanddicke der Seitenwand (2) 0,35 mm
Wanddicke des planen Siegelrandes (3) 1,00
Breite des Siegelrandes (3) 3,00 mm
Breite der Querrippen (7) 0,60 mm
Höhe der Querrippen (7) 1,00 mm
Zahl der Querrippen (7) 9
Gewicht des Bechers 7,2 g.

Die Herstellung erfolgte in einem gekühlten Spritzgießwerkzeug gemäß Figur 5 und 6 mit einer Taktzeit von 2 Sekunden, wovon 1,2 Sekunden auf die Einspritz- und Kühlzeit und 0,8 Sekunden auf die Nebenzeiten für das Entformen und das Schließen des Werkzeugs entfielen.

## Patentansprüche

1. Dünnwandiger, spitzgegossener Kunststoffbehälter, bestehend aus einem Boden (1) und einer Seitenwand (2) mit verstärktem Siegelrand zur Versiegelung mit einer Deckfolie, dadurch gekennzeichnet, daß der Behälter einen angußfreien Boden (1) aufweist und daß sich mindestens ein Anguß (4) am Siegelrand (3) befindet, der außerhalb dessen Oberseite liegt.

2. Kunststoffbehälter nach Anspruch 1, dadurch gekennzeichnet, daß er eine nach oben erweiterte konische Seitenwand (2) besitzt.

3. Kunststoffbehälter nach Anspruch 1 und 2, dadurch gekennzeichnet, daß er eine durch ringförmige Querrippen (7) versteifte Seitenwand (2) besitzt.

4. Kunststoffbehälter nach Anspruch 1 bis 3, dadurch gekennzeichnet, daß er eine durch leistenförmige Längsrippen (6) versteifte Seitenwand (2) besitzt.

5. Kunststoffbehälter nach Anspruch 1, dadurch gekennzeichnet, daß seine Höhe die Hälfte bis zum Dreifachen des größten Durchmessers beträgt.

6. Kunststoffbehälter nach Anspruch 1, dadurch gekennzeichnet, daß er aus polypropylen besteht.

7. Vorrichtung zur Herstellung dünnwandiger Kunststoffbehälter mit verstärktem Siegelrand zur Versiegelung mit einer Deckfolie durch Spritzgießen, dadurch gekennzeichnet, daß sie aus zwei symmetrischen Formhälften (9) und (10) besteht, die Vertiefungen aufweisen, die jeweils einer Hälfte der äußeren Form des herzustellenden Behälters entsprechen, und einen Kern (13) umschließen, welcher der inneren Form des Behälters entspricht, wobei sich die Längsachse des Kerns in der Formtrennebene (11) befindet und in einer der beiden Formhälften (9) oder (10) mindestens ein Angußkanal (18) derart angeordnet ist, daß er an dem Teil der Formhöhlung endet, in dem sich der Siegelrand (3) des Behälters bildet, und daß der Anguß (4) sich außerhalb der Oberseite des Siegelrandes (3) befindet.

## Claims

1. A thin-walled, injection-molded plastic container comprising a bottom (1) and a side wall (2) with thickened sealing rim to be sealed with a covering foil, wherein the container has a gateless bottom (1) and at least one gate (4) located on the sealing rim (3) being outside of the upper side of said sealing rim (3).

2. The plastic container as claimed in claim 1, wherein the side wall is conical, and widens in the upward direction.

3. The plastic container as claimed in claims 1 and 2, wherein the side wall (2) is stiffened by ring-shaped transverse ribs (7).

4. The plastic container as claimed in claims 1 to 3, wherein the side wall (2) is stiffened by bar-shaped lengthwise ribs (6).

5. The plastic container as claimed in claim 1, wherein the height is half to three times the maximum diameter.

6. The plastic container as claimed in claim 1, when manufactured from polypropylene.

7. Apparatus for the manufacture of a thin-walled plastic container having a thickened sealing rim to be sealed with a covering foil, by injection molding, which comprises two symmetrical mold halves (9) and (10), which possess recesses which each correspond to one half of the outer shape of the container to be manufactured, and which surround a core (13) which corresponds to the inner shape of the container, the lengthwise axis of the core being in the mold parting plane (11) and a runner (18) being so arranged in one of the two mold halves (9) or (10) that it terminates on the part of the mold cavity in which the sealing rim (3) of the container is formed and that the gate (4) is located outside the upper side of the sealing rim (3).

## Revendications

1 - Récipient en matière plastique à paroi mince, moulé par injection, composé d'un fond (1) et d'une paroi latérale (2) munie d'un rebord de fermeture renforcé destiné à permettre de fermer le récipient par soudage d'une pellicule de recouvrement, caractérisé en ce que le récipient présente un fond (1) dépourvu d'attaque et en ce que le rebord de fermeture (3) présente au moins une attaque (4) qui se trouve en dehors de sa face supérieure

2 - Récipient en matière plastique selon la revendication 1, caractérisé en ce qu'il présente une paroi latérale conique (2) qui s'élargit vers le haut.

3 - Récipient en matière plastique selon les revendications 1 et 2, caractérisé en ce qu'il possède une paroi latérale (2) renforcée par des nervures transversales annulaires (7).

4 - Récipient en matière plastique selon les revendications 1 à 3, caractérisé en ce qu'il possède une paroi latérale (2) renforcée par des nervures longitudinales (6) en forme de languettes.

5 - Récipient en matière plastique selon la revendication 1, caractérisé en ce que sa hauteur vaut de la moitié au triple du diamètre maximum.

6 - Récipient en matière plastique selon la revendication 1, caractérisé en ce qu'il est composé de polypropylène.

7 - Outillage pour la fabrication par moulage par injection de récipients en matière plastique à paroi mince possédant un rebord de fermeture renforcé destiné à permettre de fermer le récipient par soudage d'une pellicule de recouvrement, caractérisé en ce qu'il est composé de deux demi-moules symétriques (9 et 10) qui présentent des évidements correspondant chacun à la moitié de la forme extérieure du, récipient à fabriquer et qui entourent un noyau (13) qui correspond à la forme intérieure du récipient, l'axe longitudinal du noyau se trouvant dans le plan de joint (11) du moule et au moins un canal d'injection (18) étant agencé dans une des demi-moules 9 ou 10 de manière à se terminer dans la partie de l'empreinte de moulage dans laquelle se forme le rebord de fermeture (3) du récipient, et en ce que l'attaque (4) se trouve en dehors de la face supérieure du rebord de fermeture (3).

FIG. 1

1

2

3

4

FIG. 6

9a

19

13

3

17

15

1

14

10a

11

4

2

16

18

20

18a

FIG.2

FIG.3

FIG. 4

0 091 609

FIG. 5